# EUROPEAN PATENT SPECIFICATION

(11) **EP 0 634 592 B1**
(45) Date of publication and mention of the grant of the patent: **14.04.1999**
(21) Application number: 94201841.7
(22) Date of filing: 28.06.1994
(51) Int. Cl.: F16H 63/42

(54) **Gear change indicator**
Gangschalt-Anzeiger
Indicateur de changement de vitesse

(30) Priority: 15.07.1993 US 92273
(43) Date of publication of application: 18.01.1995
(73) Proprietor: SATURN CORPORATION, Troy, Michigan 48007-7025 (US)
(72) Inventor: Milunas, Rimas Stasys, Rochester Hills, Michigan 48309 (US); Bolander, William Joseph, Clarkston, Michigan 48346 (US)
(74) Representative: Manitz, Finsterwald & Partner

(56) References cited:
- EP-A- 0 347 261
- EP-A- 0 512 596
- DE-A- 3 018 032
- US-A- 4 492 112
- PATENT ABSTRACTS OF JAPAN vol. 017, no. 350 (M-1438), 2 July 1993 & JP-A-05 044826 (JAPAN ELECTRON CONTROL SYST CO LTD), 23 February 1993,

## Description

This invention relates to a method of providing an indication of a required gear change in a motor vehicle and to gear change indication apparatus.

Gear change or shift indicators are commonly used in manual transmission vehicles to assist non-expert drivers in determining when it is appropriate to shift the transmission to a higher gear in order to maximise driving fuel economy. A system calibrated such that absolute maximum fuel economy would be obtained if a shift occurs at the point indicated may exhibit a noticeable sag in axle torque at the shift and therefore result in an unpleasant shift feel to the driver. In such situations, drivers quickly learn to ignore the shift indicator, thus rendering it ineffective for its intended purpose of maximising fuel economy. Fuel economy figures required to be displayed on new vehicles for sale in the United States are arrived at through a customer usage weighting of the fuel economy obtained on vehicles tested using the upshift indicator light and fuel economy obtained without using the upshift indicator light.

Conventional shift indicator calibration typically involves setting manifold absolute pressure (MAP) thresholds at a variety of speeds. Such a method can be time consuming and result in non-optimal shift points. Additionally, as actual engine torque changes due to spark retardation for control of engine knock as may be practised in the engine control, the calibrated shift points based on MAP thresholds may no longer be appropriate, thereby exacerbating the aforementioned axle torque sag and leading to driver disregard of the shift indicator and reduced fuel economy.

EP-A-0512596 discloses a method in accordance with the preamble of Claim 1.

The present invention seeks to provide improved gear shift indication.

A method of providing a signal of a required gear change according to the present invention is characterised over EP-A-0512596 by the features specified in the characterising portion of claim 1.

It is possible in preferred embodiments to balance the comfort of the shift at the point indicated by the shift indicator with the fuel economy benefits at the shift point since this will tend to result in higher driver usage, higher actual fuel economy and higher fuel efficiency ratings for a particular vehicle.

It is also possible to adapt shift indication for actual engine torque conditions, to simplify the calibration of a shift indicator and to allow for flexible indexing of the indicator according to desired fuel economy versus performance profiles.

A preferred embodiment calculates a term referred to as Upshift Torque Ratio (UTR) which represents the ratio of predicted wheel torque in the next highest gear to present wheel torque in the current gear. This ratio is compared to a predetermined calibration threshold value to determine if upshift indication is appropriate. The calibration threshold preferably determines the characteristics and balance of the shift in terms of fuel economy and performance. A threshold value close to unity provides a shift point which will achieve maximum fuel economy, while a threshold value higher than unity will provide for increased performance shifting.

An embodiment of the present invention is described below, by way of example only, with reference to the accompanying drawings, in which:
Figure 1 shows a motor vehicle manual transmission drivetrain, spark ignition internal combustion engine and microprocessor based engine control unit;
Figures 2 to 4, 5A and 5B are flow diagrams representative of an embodiment of program instructions executed by the engine control unit of Figure 1.

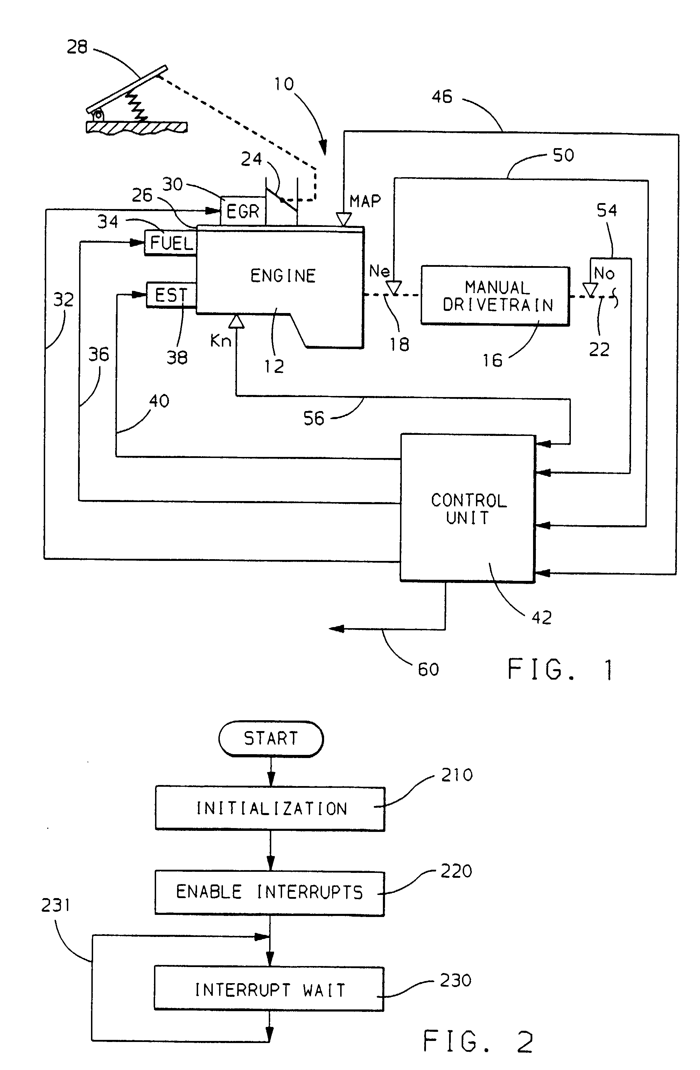

Referring to Figure 1, a motor vehicle drivetrain 10 comprises a spark ignition internal combustion engine 12, an engine output shaft 18 and a combination of conventional manual clutch, gearbox and final drive assembly (manual drivetrain) 16. Output shaft 22 drives the vehicle wheels (not shown) for propelling the vehicle at a speed directly proportional to its rotation.

A throttle 24 controls the ingestion of combustion air through the engine intake manifold 26. Throttle 24 is positioned in a conventional manner by an accelerator pedal 28. An exhaust gas recirculation (EGR) actuator 30 additionally returns a controlled amount of exhaust gases to the manifold 26 in accordance with an EGR control signal on line 32. Engine fuelling is controlled by conventional fuel injection apparatus 34 in accordance with a fuel pulse width signal on line 36.

The engine ignition function is carried out with a conventional spark ignition system (not shown) which cooperates with a conventional electronic spark timing (EST) unit 38 to initiate combustion in the various engine cylinders in accordance with a spark timing signal on line 40. Spark timing signals are generated by microprocessor based engine control unit 42 in a predetermined manner in accordance with various operating parameters (including sensed engine knock) of the drivetrain 10 in a manner well known to those skilled in the art. Control unit 42 receives inputs used by the present embodiment, including manifold absolute pressure (MAP) on line 46, engine speed (Ne) on line 50 and output speed (No) on line 54. A knock sensor Kn is also shown, providing a signal input, via line 56, to control unit 42. Control unit 42 indicates via line 60 the state of an upshift indicator light or equivalent visual display such as is found in conventional instrumentation in a motor vehicle. Line 60 may provide a logic signal to a instrument cluster for further processing or may drive a lamp directly via a power driver in control unit 42. Control unit 42 may be a conventional microprocessor controller including a central processing unit, memory and input-output devices.

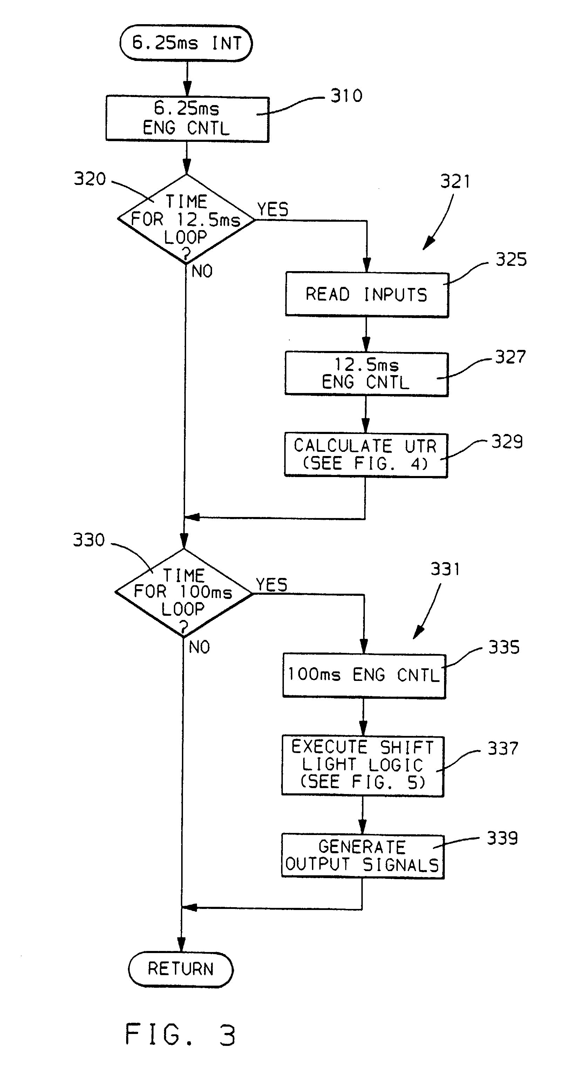

Figures 2 to 4, 5A and 5B show flow diagrams representative of program instructions executed by the engine control unit 42 of Figure 1 in carrying out an embodiment of upshift indication function. The flow diagram of Figure 2 represents a main loop program which initiates the operation of a number of subroutines for performing various engine control related tasks. The flow diagrams of Figures 3, 4, 5A and 5B represent the subroutines which are pertinent to the upshift indication function.

Referring to the main loop flow diagram of Figure 2, reference numeral 210 designates a set of program instructions executed at the beginning of each period of vehicle operation. The instructions initialise various registers, timers, flags and variables stored in control unit 42. After initialisation, the routine proceeds to step 220 to enable all software timer and hardware interrupts for executing subroutines to carry out various engine control functions. Step 230 provides an interrupt wait loop together with return line 231 during which the control unit 41 performs various conventional background functions such as engine diagnostic routines and reading and conditioning oxygen sensor inputs while awaiting a timer or hardware interrupt to call subroutines for performing various specific engine control functions according to predetermined schedules or triggering events.

In the preferred embodiment, a timer interrupt (6.25 INT) occurs at 6.25 millisecond intervals and causes the execution of the program steps shown in Figure 3. Step 310 is first executed for performing various predetermined engine control functions appropriate for the frequency of the 6.25ms interval. Decision step 320 is next executed to determine if a set of less frequently executed instructions 321 is to be executed. This may be caused to occur, for example, by well known and practised techniques such as the expiration of a timer, requisite multiple passes through the 6.25ms INT routine or separate timer interrupt having priority to execute and return control to the current 6.25ms INT routine. Decision step 320 indicates an exemplary frequency for execution of instruction set 321 of every 12.5ms, which in the present embodiment is caused to occur every second pass through the 6.25ms interrupt.

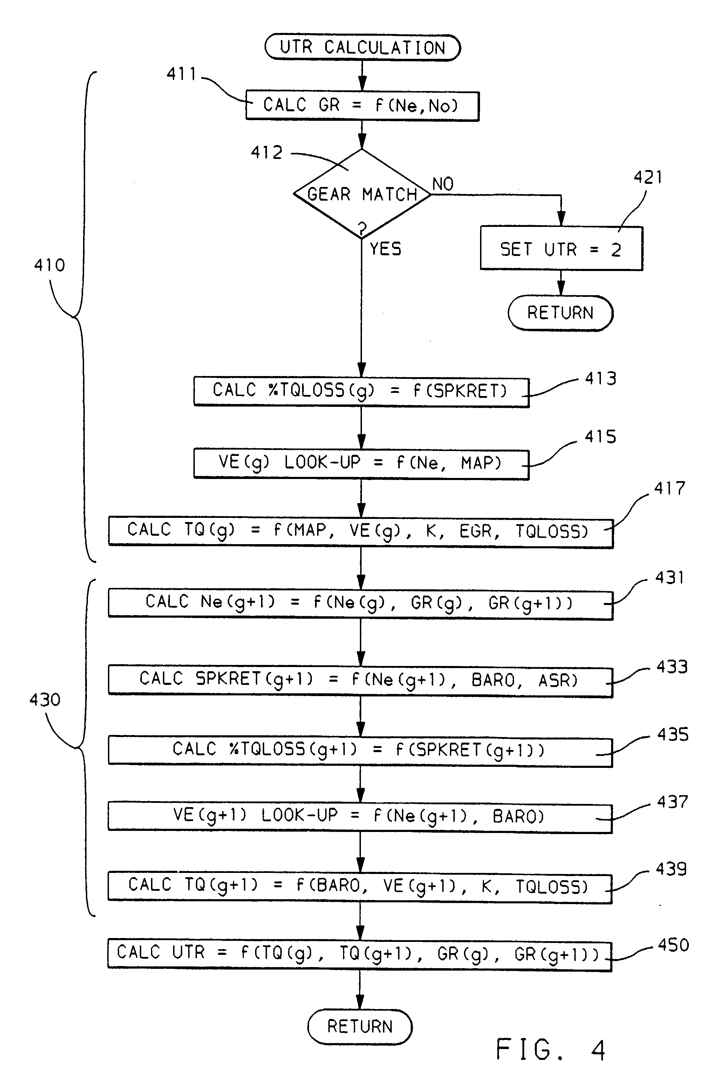

If it is not time for execution of instruction set 321, control passes to decision step 330. Assuming it is time for execution of instruction set 321, control unit 42 at step 325 reads and conditions the various input signals applied to lines 46-56, and calculates various terms used in subsequent steps, including spark retard, barometric pressure (BARO) and percent exhaust gas recirculation (%EGR). Step 327 next performs various predetermined engine control functions appropriate for the frequency of the 12.5ms interval. Step 329 performs the computation of the Upshift Torque Ratio (UTR), which is described in detail in the flow diagram of Figure 4.

Decision step 330 is next executed to determine if a set of even less frequently executed instructions 331 is to be executed. This may be caused to occur in a manner similar to those discussed for decision step 320.

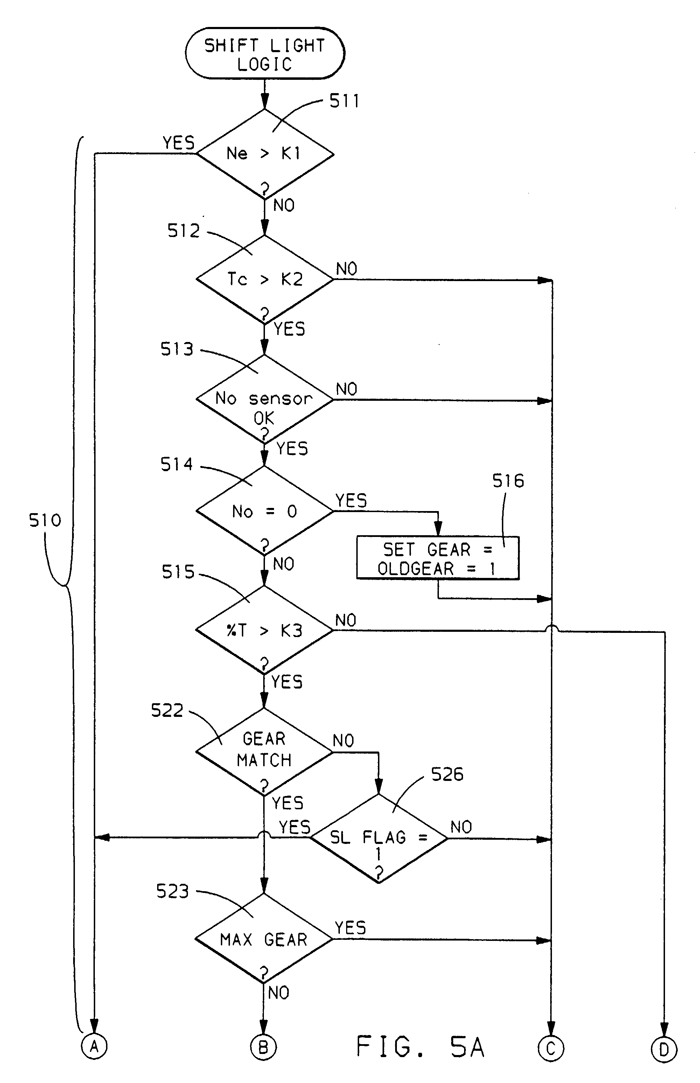

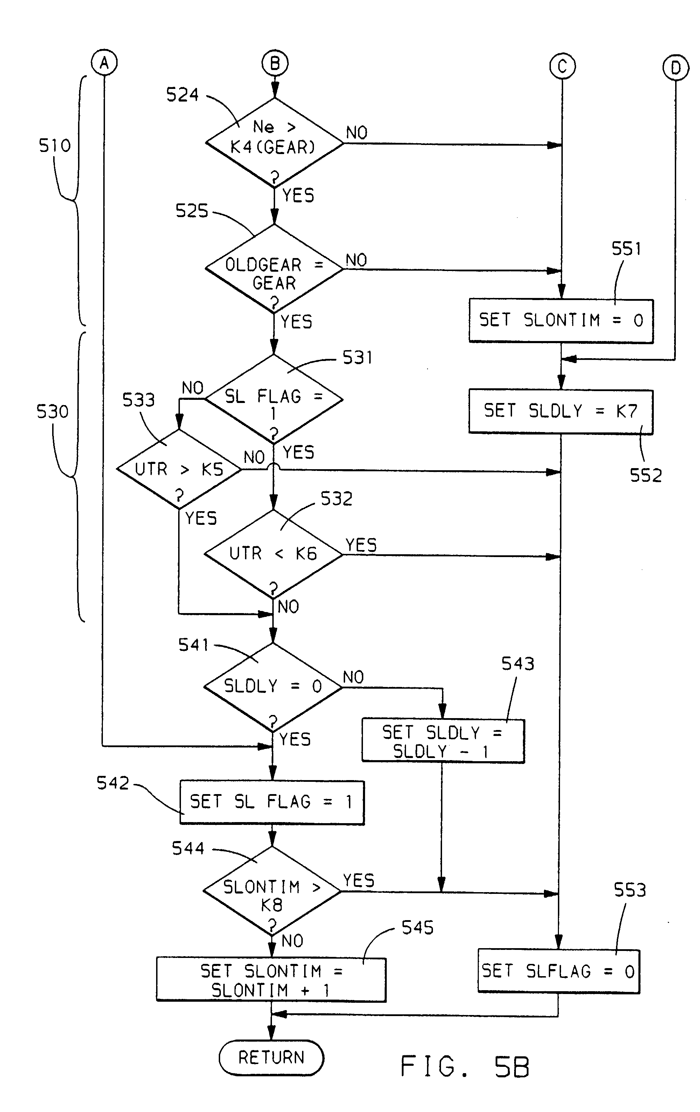

Decision step 330 indicates a frequency for execution of instruction set 331 of every 100ms. If it is not time for execution of instruction set 331, the 6.25ms interrupt routine is complete and control returns to the background routine of Figure 2. Assuming it is time for execution of instruction set 331, control unit 42, at step 335 performs various predetermined engine control functions appropriate for the frequency of the 100ms interval. Step 337 refers to the execution of the shift light logic routine which is described in detail in the flow diagram of Figure 5. Finally, control unit 42 outputs at step 339 a signal on line 60 for indicating the state of the upshift indicator light as well as various other output signals for instrument cluster displays, such as vehicle speedometer, oil pressure and coolant temperature.

Referring to Figure 4, a preferred routine for calculating the Upshift Torque Ratio (UTR CALCULATION) for use in upshift indication is illustrated. The designations (g) and (g+1) designate current gear and next highest gear values, respectively. Where no designations are used, the current gear is referred to. A set of steps 410 is first executed to determine a current value of engine torque. Upon commencement of UTR CALCULATION, step 411 calculates the current gear ratio "GR(g)" from current engine speed "Ne (g)" and output speed "No" according to the following expression:$\text{GR(g) = Ne(g)/No}$

A check is made at decision step 412 to determine if the calculated gear ratio matches a known gear ratio and, if no match is recognised, passes processing to step 421 which sets the upshift torque ratio (UTR) to a default value of two, in this example, and then exits the UTR CALCULATION routine. The default value is essentially a "don't care" value which is used for further processing, as will be seen in connection with Figure 5a.

The current gear ratio GR(g) will match a given gear provided the manual clutch is engaged and slip thereacross is minimal. When the clutch is disengaged, as may be the case where the driver has initiated a shift, a gear match may not occur.

If the gear ratio matches a known gear, step 413 calculates the percent torque loss "%TQLOSS" in the current gear due to the current amount of spark retard. The present embodiment assumes spark retard is a controlled engine parameter used, for example, to control engine knock in a manner known in the art. Spark retard is preferably accounted for in this embodiment since it may have a significant effect on engine torque, especially at low and moderate engine speeds where both the incidence of engine knock is most prevalent and more fuel efficient upshifting will typically occur. The percent torque loss is determined on the basis of the expression:$\text{%TQLOSS(g) = SPKRET(g)/SPKRET(100% tqloss)}$ where SPKRET(g) is the current amount of spark retard and SPKRET(100% tqloss) is the amount of spark retard needed for 100% torque loss. Spark retard may be determined from empirically determined calibration tables. Spark retard may be a value adaptively derived as shown, for example, in US-A-5,090,382.

Engine volumetric efficiency "VE(g)" is next obtained from a calibration table a function of engine speed Ne(g) and MAP at step 415. Current engine torque "TQ(g)" is then determined at step 417 according to the expression:$\text{TQ(g)=[(MAP(g)∗VE(g)∗K)∗(EGR(g)) - Tf]∗(TQLOSS)}$ where K is a calibration constant predetermined during fuel metering and related to actual engine displacement, operating temperature, combustion efficiency, fuel/air energy content and the universal gas constant; EGR(g) is a gain value substantially corresponding to the complement of current percent exhaust gas recirculation (1-%EGR); Tf is a torque offset related to engine mechanical friction at current engine speed and the term TQLOSS represents a gain substantially corresponding to the complement of the percent torque loss attributed to the current spark retard (1-%TQLOSS(g)).

A set of steps 430 is next executed for the purpose of calculating a predicted value of engine torque available in the next higher gear at the current output speed. Preferably, the predicted torque value corresponds to a maximum available torque (wide open throttle) in the next higher gear which simplifies the associated predicted torque calculation. The present embodiment exemplifies calculation of a predicted maximum engine torque.

Step 431 first calculates a predicted engine speed in the next higher gear Ne(g+1) based on current engine speed Ne(g), the current gear ratio GR(g) and the gear ratio in the next higher gear GR(g+1). It is an assumption at this step that output speeds at current and next higher gears No(g), No(g+1) would be substantially equivalent and therefore predicted engine speed is a simple function of the current engine speed, current gear ratio and next higher gear ratio in accordance with the following relationship:$\text{Ne(g+1) = Ne(g)∗GR(g+1)/GR(g)}$

Predicted spark retard in the next higher gear SPKRET(g+1) is calculated at step 433 from predicted engine speed Ne(g+1), BARO and any amount of adaptive spark retard (ASR) such as may be appropriately applied according to, for example, US-A-5,090,382. Since the maximum engine torque available in the next higher gear is being determined, BARO is preferably used in lieu of a predicted value of MAP since BARO substantially represents a maximum torque condition. Alternatively, a predicted value for MAP could be used.

Predicted percent torque loss in the next higher gear "%TQLOSS(g+1)" due to predicted spark retard is calculated at step 435 according to the following relationship in a manner similar to that provided at step 413:$\text{%TQLOSS(g+1) = SPKRET(g+1)/SPKRET(100% tqloss)}$ where SPKRET(g+1) is the predicted amount of spark retard (including any amount of adaptive spark retard) as calculated at step 433 and SPKRET(100% tqloss) is the amount of spark retard needed for 100% torque loss.

Step 437 next determines predicted volumetric efficiency "VE(g+1)" in the next higher gear as a function of predicted engine speed Ne(g+1) and BARO. Again, BARO is utilised in lieu of a predicted MAP value since maximum engine torque conditions are assumed. The final step in the set 430 for calculating predicted engine torque in the next higher gear is step 439 which calculates predicted engine torque "TQ(g+1)" according to the expression:$\text{TQ(g+1)=[BARO∗VE(g+1)∗K) - Tf]∗(TQLOSS)}$ where K is the calibration constant of step 417; Tf is the torque offset related to engine mechanical friction at the predicted engine speed Ne(g+1) and the term TQLOSS represents a gain substantially corresponding to the complement of the percent torque loss attributed to the predicted spark retard (1-%TQLOSS (g+1)). It is here noted that BARO again is used in lieu of MAP in the preceding expression. Consistent with the assumption of maximum engine torque (wide open throttle), the percent exhaust gas recirculation becomes zero in this example. The gain attributed zero %EGR is therefore unity in this example, thereby accounting for the absence of an explicit EGR gain term in the expression of the predicted engine torque.

Finally, step 450 establishes the current and predicted wheel torques as the product of respective engine torques and corresponding gear ratios, and establishes the ratio of predicted wheel torque to current wheel torque to establish the upshift torque ratio (UTR) in accordance with the expression:$\text{UTR=(TQ(g+1)∗GR(g+1))/(TQ(g)∗GR(g))}$

In this example, the upshift torque ratio (UTR) represents the ratio of maximum predicted wheel torque to current wheel torque. Thereafter, program control returns to decision step 330 of Figure 3.

The upshift torque ratio (UTR) calculated provides a single dynamic parameter derived from continually updated inputs having measurable impact upon the wheel torque available in the current gear and from predicted wheel torque available in the next higher gear. Preferably, as illustrated in the above example, dynamic torque reducing influences such as exhaust gas recirculation control and spark retard for engine knock control are factored into the torque calculations to provide for finely tuned torque estimates responsive to dynamic driving conditions. It is contemplated that other factors influencing engine torque, for example fuel composition in variable fuel vehicles, may likewise be factored into the expressions where appropriate.

A measure of the ratio of predicted wheel torque in the next higher gear to current wheel torque in the present gear (UTR) provides information for control of an upshift indicator in a manner less complicated and more accurately representative of dynamic driving conditions than conventional MAP threshold techniques. Additionally, the use of the upshift torque ratio is suitable for customising shift point indication according to any desired fuel economy/performance profile. When the upshift torque ratio (UTR) is less than one, the vehicle will decelerate and possibly exhibit undesirable driveline disturbance if an upshift is completed. With an upshift torque ratio (UTR) substantially equal to one, the operator may need to increase the throttle position in the next higher gear to maintain speed. Moreover, an upshift torque ratio (UTR) near one indicates an upshift point which will yield maximum fuel economy. As the upshift torque ratio (UTR) increases beyond one, more performance oriented shifts to the next higher gear are possible. Therefore, a calibration threshold against which the upshift torque ratio (UTR) is compared will determine the operation of an upshift indicator and corresponding shift feel and economy at that indicated shift point. The calibration threshold can readily be chosen to match the desired fuel economy/performance profile of the vehicle. The calibration may be so chosen to maximise actual fuel economy by indicating that an upshift is appropriate at a point where the comfort during the shift yields high driver usage at relatively high levels of fuel economy.

Referring to Figures 5A and 5B, the embodiment of routine illustrated utilises the upshift torque ratio (UTR) previously calculated for generating an upshift indication. The SHIFT LIGHT LOGIC routine of Figure 5 is executed at step 337 of the 6.25ms interrupt routine of Figure 3 and comprises a set of entry condition steps 511 to 525 designated generally by numeral 510 and a set of shift threshold steps 531 to 533 designated generally by numeral 530. The purpose of the SHIFT LIGHT LOGIC routine is to establish the state of the shift light flag "SL FLAG" which in turn controls the state of the shift light. First, engine speed Ne is checked at step 511 to determine if it exceeds a predetermined maximum allowable engine speed threshold K1. If the threshold is exceeded, then an upshift is required regardless of the value of the upshift torque ratio (UTR) and control is therefore passed to step 542 where the shift light flag is set to one (SL FLAG = 1). If the threshold at step 511 is not exceeded, the routine passes to step 512.

Decision step 512 performs a check of coolant temperature against a predetermined threshold K2. Where the threshold is not exceeded, the engine has not attained a predetermined operating temperature the routine bypasses shift threshold steps 530. Where the coolant temperature threshold is satisfied, decision step 513 is next executed.

Decision step 513 determines if the output speed sensor is operational. If the speed sensor is not operational, the routine bypasses shift threshold steps 530. An operational output speed sensor allows control to pass to decision step 514 where a check is performed to determine if the vehicle is at a standstill (No=0). When the vehicle is at rest, step 516 sets GEAR and OLDGEAR to the lowest gear value of 1 representing first or starting gear; thereafter, shift threshold steps 530 are bypassed. If the vehicle is not at rest, the routine passes to step 515.

Throttle position "%T" is checked at step 515 against a closed position threshold K3. Closed throttle is indicative of vehicle coasting, a state of operation in which the engine is not imparting torque to the drive wheels and thus does not necessitate an upshift. Closed throttle may also be indicative of the driver purposefully using the drivetrain to decelerate the vehicle. Therefore, when a closed throttle is detected, control bypasses the upshift threshold steps 530 and proceeds with execution of step 552. A non-closed throttle position is indicative of the engine imparting torque to the drive wheels - operation which may benefit from a gear upshift - and therefore control remains in the entry condition steps 510 by executing step 522.

A check is performed at step 522 to determine if the current calculated gear ratio GR(g) matches a known gear ratio associated with a GEAR value (i.e. 1-5). As mentioned in connection with step 412 in Figure 4, an already initiated shift may account for a no gear match condition. If no match occurs, the routine passes to decision step 526, thereby bypassing the remaining entry condition steps 510 and any shift threshold steps 530. Step 526 decides if the shift light is active by checking SL FLAG and if so the routine passes directly to step 542 and maintains the current SL FLAG state as one. When step 526 decides that the shift light is inactive, the routine passes directly to step 551, likewise to maintain the current SL FLAG state as zero. Therefore, a no gear match condition maintains the current state of SL FLAG and bypasses processing of shift threshold steps 530. A gear match at step 522 passes control to decision step 523.

The current matched gear is checked at step 523 to determine if it is the highest gear available, in which case no upshift is possible. If GEAR is equal to the highest gear available then upshift threshold steps 530 are bypassed. If higher gears are available, processing continues at step 524 with a check if the engine speed Ne exceeds a predetermined threshold speed K4(GEAR), which is a function of the current gear and represents a minimum engine speed appropriate for upshift to the next gear. Where the threshold engine speed is not exceeded, upshift threshold steps 530 are bypassed. Where the threshold engine speed has been satisfied, a final entry condition step 525 is performed to determine if the current gear status is in a steady state. If the current gear does not equal the last gear (GEAR ≠ OLDGEAR), then a steady state condition is not present and the upshift threshold steps 530 are bypassed. A steady state, in which the last known gear equals the current gear, allows processing to pass into the upshift threshold steps 530.

With the exception of throttle entry condition at step 515, any failed decision step in the entry condition steps 510 passes processing to step 551 which initialises a shift light on counter "SLONTIM". Step 552 is then carried out, which initialises a shift light delay counter "SLDLY" to a predetermined threshold value K7. Step 552 is alternatively encountered as a first step after a failed throttle entry condition detected at step 515, thereby bypassing step 551 and corresponding reset on SLONTIM. This is done for the purpose of preventing continual resetting of the timer and cyclical switching on and off of the shift light during closed throttle engine braking as the vehicle travels downhill and also for preventing resetting of the timer if the throttle is momentarily closed. The exact purpose and usage of SLONTIM and SLDLY is explained below. Finally, it follows that since an entry condition was not satisfied in steps 510, the shift light flag is set to zero (SL FLAG = 0) thus to set the shift light OFF.

Upshift threshold steps 530 are accessed at decision step 531, at which a determination as to the shift light state is made according to the status of SL FLAG. If the shift light is off (SL FLAG = 0) then the routine branches to execute step 533. Step 533 compares the upshift torque ratio (UTR) to a first predetermined torque ratio threshold K5 which, if not exceeded, causes execution of step 553 to maintain the shift light flag at zero. If the result of decision step 533 is that the upshift torque ratio (UTR) exceeds the threshold K5, then processing passes to step 541.

Returning to step 531, if the shift light is on (SL FLAG = 1) then step 532 is executed to compare the upshift torque ratio (UTR) to a second predetermined torque ratio threshold K6. In the case where the upshift torque ratio (UTR) is less than the threshold K6, then step 553 is executed and sets the shift light flag to zero. Alternatively, when the upshift torque ratio (UTR) equals or exceeds the threshold K6, decision step 541 is executed. The upshift threshold steps 530 comprise separate checks of the upshift torque ratio (UTR) against one of two torque ratio thresholds K5 or K6, in which K5 > K6, the threshold check being determined according to the state of the SL FLAG. A degree of hysteresis is thereby introduced to stabilise the state of the SL FLAG and corresponding shift light state.

Decision step 541 is executed from either step 533 or 532 when it is appropriate according to the predetermined torque thresholds for the SL FLAG to be set to one (SL FLAG = 1). Step 541 checks whether shift light delay counter SLDLY has reached the end of its count, thereby introducing a delay into the routine prior to setting the SL FLAG at step 542 according to a predetermined number of passes through upshift threshold steps 530 and on to step 541 without intervening failure at any preceding entry condition step 511 to 525 to minimise actuation of the shift light. When the shift light delay counter has not reached the end of its count, it is decremented at step 543 and the routine passes to step 553 to set the shift light flag to zero (SL FLAG = 0). An end of shift light delay count, as determined at step 541, causes processing to proceed to step 542 where the shift light flag is set to one (SL FLAG = 1). Thereafter steps 542 and 544 are carried out to check if the shift light on counter SLONTIM exceeds a predetermined threshold K8. When the threshold K8 is exceeded, the shift light flag is set to zero at step 553, thereby limiting the indicator light on time to prevent any annoyance which continual illumination may cause to drivers who choose to ignore it. Where the threshold K8 has not been exceeded, the shift light on counter SLONTIM is incremented at step 545.

When the SHIFT LIGHT LOGIC routine shown in Figure 5 returns control to step 339 of Figure 3, the state of SL FLAG is used to establish an output signal on line 60 of control unit 42 to cause illumination of a shift indicator light.

## Claims

1. A method of providing a signal of a required gear change in a motor vehicle comprising the steps of calculating a torque ratio of a predicted wheel torque for a next higher gear to a present wheel torque for the engaged gear (450); comparing the torque ratio to a predetermined threshold (532,533); and outputting a signal (339) when the torque ratio exceeds the predetermined threshold; characterised in that the signal (339) provides an indication of a required gear change; and in that the predetermined threshold corresponds to a torque ratio intended to maximise fuel economy at the next higher gear.

2. A method according to claim 1, wherein the predicted wheel torque substantially corresponds to a maximum wheel torque.

3. A method according to claim 1 or 2, wherein the step of calculating the torque ratio includes the steps of calculating a current engine torque value for the engaged gear from predetermined engine parameters (417); calculating a predicted engine torque value for the next higher gear from the predetermined engine parameters (439); establishing a current wheel torque value from the current engine torque value for the engaged gear and the gear ratio corresponding thereto; and establishing a predicted wheel torque value from the predicted engine torque value in the next higher gear and the gear ratio corresponding thereto.

4. A method according to claim 3, wherein the predetermined engine parameters include spark retard.

5. A method according to claim 3 or 4, wherein the predetermined engine parameters include exhaust gas recirculation.

6. A method according to claim 3, 4 or 5, wherein the predetermined engine parameters include fuel composition.

## Patentansprüche

1. Verfahren zum Bereitstellen eines Signals eines erforderlichen Gangwechsels in einem Kraftfahrzeug mit den Schritten, daß ein Drehmomentverhältnis eines vorhergesagten Raddrehmoments für einen nächsthöheren Gang zu einem gegenwärtigen Raddrehmoment für den in Eingriff stehenden Gang berechnet wird (450), daß das Drehmomentverhältnis mit einer vorbestimmten Schwelle verglichen wird (532, 533), und daß ein Signal ausgegeben wird (339), wenn das Drehmomentverhältnis die vorbestimmte Schwelle überschreitet, dadurch gekennzeichnet, daß das Signal (339) eine Anzeige eines erforderlichen Gangwechsels liefert, und daß die vorbestimmte Schwelle einem Drehmomentverhältnis entspricht, das dazu bestimmt ist, die Kraftstoffwirtschaftlichkeit bei dem nächsthöheren Gang zu maximieren.

2. Verfahren nach Anspruch 1, wobei das vorhergesagte Raddrehmoment im wesentlichen einem maximalen Raddrehmoment entspricht.

3. Verfahren nach Anspruch 1 oder 2, wobei der Schritt des Berechnens des Drehmomentverhältnisses die Schritte umfaßt, daß ein gegenwärtiger Motordrehmomentwert für den in Eingriff stehenden Gang aus vorbestimmten Motorparametern berechnet wird (417), daß ein vorhergesagter Motordrehmomentwert für den nächsthöheren Gang aus den vorbestimmten Motorparametern berechnet wird (439), daß ein gegenwärtiger Raddrehmomentwert aus dem gegenwärtigen Motordrehmomentwert für den in Eingriff stehenden Gang und dem diesem entsprechenden Übersetzungsverhältnis festgelegt wird, und daß ein vorhergesagter Raddrehmomentwert aus dem vorhergesagten Motordrehmomentwert bei dem nächsthöheren Gang und dem diesem entsprechenden Übersetzungsverhältnis festgelegt wird.

4. Verfahren nach Anspruch 3, wobei die vorbestimmten Motorparameter eine Zündungsverzögerung umfassen.

5. Verfahren nach Anspruch 3 oder 4, wobei die vorbestimmten Motorparameter eine Abgasrückführung umfassen.

6. Verfahren nach Anspruch 3, 4 oder 5, wobei die vorbestimmten Motorparameter eine Kraftstoffzusammensetzung umfassen.

## Revendications

1. Procédé consistant à fournir un signal d'un changement de vitesse requis dans un véhicule automobile comprenant les étapes consistant à calculer un rapport de couples d'un couple de roue prédit pour une vitesse supérieure suivante sur un couple de roue courant pour la vitesse engagée (450) ; à comparer le rapport des couples à un seuil prédéterminé (532, 533) ; et à sortir un signal (339) lorsque le rapport des couples dépasse le seuil prédéterminé ; caractérisé en ce que le signal (339) fournit une indication d'un changement de vitesse requis ; et en ce que le seuil prédéterminé correspond à un rapport de couples destiné à maximiser l'économie de carburant à la vitesse supérieure suivante.

2. Procédé selon la revendication 1, dans lequel le couple de roue prédit correspond sensiblement à un couple de roue maximal.

3. Procédé selon le revendication 1 ou 2, dans lequel l'étape de calcul du rapport des couples comprend les étapes consistant à calculer une valeur de couple moteur courante pour la vitesse engagée à partir de paramètres de moteur prédéterminés (417) ; à calculer une valeur de couple moteur prédite pour la vitesse supérieure suivante à partir des paramètres de moteur prédéterminés (439) ; à établir une valeur de couple de roue courante à partir de la valeur de couple moteur courante pour la vitesse engagée et le rapport de vitesses correspondant à celle-ci ; et à établir une valeur de couple de roue prédite à partir de la valeur de couple moteur prédite dans la vitesse supérieure suivante et le rapport de vitesses correspondant à celle-ci.

4. Procédé selon la revendication 3, dans lequel les paramètres de moteur prédéterminés comprennent le retard à l'allumage.

5. Procédé selon la revendication 3 ou 4, dans lequel les paramètres de moteur prédéterminés comprennent la recirculation des gaz d'échappement.

6. Procédé selon la revendication 3, 4 ou 5, dans lequel les paramètres de moteur prédéterminés comprennent la composition du carburant.
